# FASCICULE DE BREVET EUROPEEN

(11) **EP 0 842 731 B1**
(45) Date de publication et mention de la délivrance du brevet: **27.11.2002**
(21) Numéro de dépôt: 97119334.7
(22) Date de dépôt: 05.11.1997
(51) Int. Cl.: B23K 33/00, A44C 5/02

(54) **Dispositif de fixation de tige d'articulation, bracelet formé de maillons articulés fixés à l'aide d'un tel dispositif et procédé d'assemblage d'une tige d'articulation**
Verfahren und Vorrichtung zum Fixieren einer Gelenkstange, mit diesem Verfahren hergestelltes mehrgliedriges Armband
Method and apparatus for fixing a joint shaft, and with this method strap band composed of articulated links

(30) Priorité: 14.11.1996 FR 9613891
(43) Date de publication de la demande: 20.05.1998
(73) Titulaire: WERTHANOR S.A., CH-2400 Le Locle (CH)
(72) Inventeur: Burdet, Yves, 2400 Le Locle (CH); Wenger, Sylvain, 1291 Commugny (CH)
(74) Mandataire: Ravenel, Thierry Gérard Louis

(56) Documents cités:
- CH-A- 263 741
- DE-A- 2 744 370
- FR-A- 2 717 991
- US-A- 5 183 400

## Description

La présente invention concerne un dispositif conformément au préambule de la revendication 1, (voir FR-A-2 717 991, par exemple). Plus particulièrement, l'invention concerne un dispositif de fixation par soudage de tiges d'articulation d'un bracelet à maillons articulés composés chacun d'éléments de maillons centraux et marginaux, dans des trous borgnes ménagés dans les éléments de maillons marginaux du bracelet.

L'invention concerne aussi un bracelet à maillons articulés fixés à l'aide du dispositif défini ci-dessus.

L'invention concerne également un procédé d'assemblage d'une tige d'articulation métallique avec un élément métallique conformément au préambule de la revendication 9 (voir aussi FR-A-2 717 991).

On connaît déjà des bracelets métalliques comprenant des maillons articulés formés chacun de plusieurs éléments de maillon respectivement des éléments de maillon centraux et des éléments de maillon marginaux. Les maillons sont reliés entre eux au moyen de tiges d'articulation cylindriques qui sont d'une part disposées dans des passages prévus dans des faces latérales des éléments de maillon centraux et d'autre part engagées à chacune de leurs extrémités dans un trou borgne prévu dans les éléments de maillon marginaux. Chaque tige est fixée sur les éléments de maillons marginaux et articulée sur les éléments de maillon centraux.

La fixation de la tige sur l'élément de maillon marginal peut être réalisée de différentes manières, par exemple par chassage de la tige dans le trou borgne, par vissage d'une vis d'arrêt noyée dans un trou fileté perpendiculaire au trou borgne et débouchant dans le trou borgne ou encore par soudage des extrémités de la tige dans le fond du trou borgne.

Le chassage et le vissage des tiges sur les éléments de maillon marginaux présentent le risque que les tiges se déchassent, respectivement que les vis d'arrêt se dévissent au cours du temps et conduisent à la désolidarisation intempestive des maillons, ce qui peut conduire à la perte du bracelet et, le cas échéant, de la montre attachée à celui-ci. On préfère donc généralement le soudage, qui procure une fixation sûre et définitive des tiges sur les éléments de maillon.

Pour ce faire, on dépose de la pâte à souder dans le fond des trous borgnes, on chasse les extrémités des tiges dans les trous, et on procède au soudage des tiges en introduisant le bracelet ainsi monté dans un four dans lequel la pâte à souder est fondue.

Ce procédé de soudage des tiges sur les maillons présente toutefois de nombreux inconvénients.

En effet, cette technique d'assemblage pose des problèmes de fabrication en ce qu'elle nécessite un ajustement très précis des dimensions respectives des trous borgnes et des tiges d'articulation sans quoi, ou la tige est trop difficile à chasser dans les trous, ce qui rallonge le temps de montage du bracelet, ou la tige est trop libre dans les trous, ce qui conduit à un risque de désassemblage total ou partiel des éléments de maillons avant l'opération de soudage et donc à la production de bracelets de qualité insatisfaisante, par exemple, à la production de bracelets ayant un jeu trop important entre les éléments de maillon centraux et latéraux.

De plus, l'air emprisonné et comprimé entre l'extrémité de la tige et de fond du trou au moment de son introduction dans le trou provoque un effet ressort qui rend parfois cette introduction difficile.

En outre, le dépôt de la pâte à souder dans les trous borgnes et son dosage est une opération délicate qui est généralement réalisée manuellement. Le dépôt d'une quantité de pâte à souder trop grande peut conduire, au cours du chauffage, à une remontée par capillarité de la pâte à souder en fusion hors du trou par l'espace situé entre les parois latérales de la tige et celle du trou borgne, ce qui provoque le soudage non désiré d'éléments de maillon voisins entre eux. Le dépôt d'une quantité de pâte à souder trop faible peut au contraire conduire à une soudure imparfaite et à une désolidarisation des éléments de maillons au cours de l'utilisation du bracelet.

L'ensemble de ces problèmes de fabrication de ce type de bracelet métallique entraîne un taux de rejet important qu'il convient de réduire.

On connaît également du document FR A-2 717 991 un procédé d'assemblage d'éléments constitutifs d'articles d'horlogerie bijouterie, notamment de bracelets de montre dans lequel les extrémités des tiges d'articulation des maillons sont soudés aux éléments de maillons par soudage sans apport de matière.

L'invention a donc pour but principal de remédier aux inconvénients de l'art antérieur susmentionné en fournissant un dispositif de fixation de tiges d'articulation notamment de maillons de bracelet par soudage qui fournisse une liaison sûre entre les tiges et les éléments de maillon, qui ne nécessite pas le respect de tolérances de fabrication très serrées pour la fabrication des tiges et la réalisation des trous borgnes et qui soit d'une mise en oeuvre simple et peu coûteuse.

A cet effet l'invention a pour objet un dispositif tel que défini par la revendication 1 du brevet.

Grâce à ces caractéristiques, la soudure ou pâte à souder peut au moment de la fusion, notamment dans le cas d'un excès de soudure, circuler de la première cavité, dans laquelle elle est disposée initialement, vers la deuxième dans laquelle elle peut être collectée et retenue. On supprime ainsi le risque de débordement de la soudure hors du trou tout en renforçant la tenue de la soudure.

Le problème délicat du dosage précis de la soudure, est également supprimé.

Les moyens de communication permettent une évacuation de l'air emprisonné dans le fond du trou facilitant la mise en place de la tige dans le trou.

Selon une caractéristique avantageuse de l'invention, les moyens de communication sont formés par les stries d'un moletage ménagé dans la zone intermédiaire.

Le moletage permet, d'une part d'élargir les tolérances de fabrication de l'extrémité de la tige et du trou borgne puisque les stries sont aisément déformables, ce qui facilite l'introduction de la tige et, d'autre part d'assurer un maintien en position des tiges dans les trous avant l'opération de soudage. Ceci est particulièrement intéressant dans le cadre d'une application à la réalisation d'un bracelet à maillons reliés entre eux à l'aide d'un dispositif selon l'invention.

Selon une autre caractéristique avantageuse de l'invention, la tige comprend un évidement qui forme au moins en partie la deuxième cavité.

Selon un autre aspect, l'invention a également pour objet un bracelet à maillons articulés tel que défini par la revendication 8 du brevet.

Selon encore un autre aspect, l'invention a également pour objet un procédé d'assemblage d'une tige d'articulation métallique avec un élément métallique tel que défini par la revendication 9 du brevet.

D'autres caractéristiques et avantages de l'invention apparaîtront plus clairement à lecture de la description suivante d'un mode de réalisation de l'invention donné à titre purement illustratif et non limitatif, cette description étant faite en liaison avec les dessins dans lesquels :
- la figure 1, est une vue en plan avec une coupe partielle d'une portion d'un bracelet à maillons articulés muni du dispositif de fixation d'une tige d'articulation selon l'invention;
- les figures 2 et 3 montrent l'extrémité d'une tige d'articulation selon le dispositif de fixation de l'invention respectivement avant et après avoir disposée de la soudure sur l'extrémité de la tige d'articulation;
- la figure 4 est une coupe partielle représentant le dispositif de l'invention avant la fusion de la soudure, celle-ci étant disposée sur l'extrémité de la tige d'articulation;
- la figure 5 est une vue similaire à la figure 4 dans laquelle la soudure est disposée dans le fond du trou borgne;
- la figure 6 est une vue similaire à la figure 3 montrant une variante de réalisation de la tige d'articulation, et
- la figure 7 est une vue partielle agrandie montrant la tige d'articulation dans le trou borgne après fusion de la soudure.

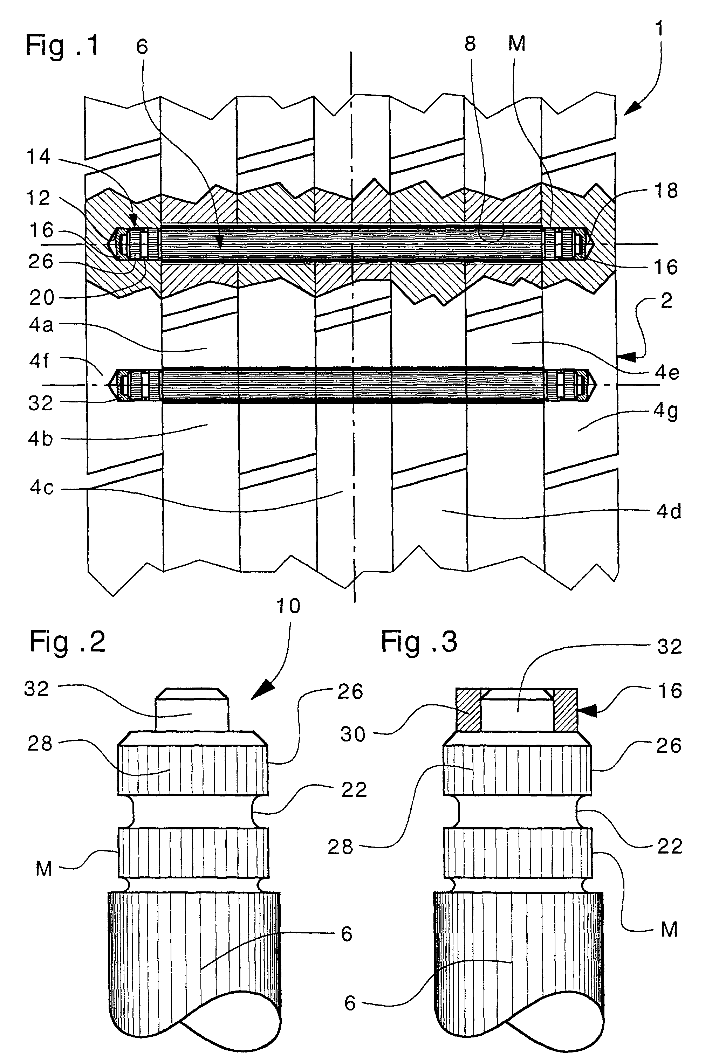

La figure 1 représente une portion de bracelet désignée par la référence numérique générale 1. Cette portion de bracelet 1 comporte des maillons articulés métalliques 2 formés chacun de plusieurs éléments de maillon respectivement des éléments de maillon centraux 4a-4e, et des éléments de maillons marginaux 4f et 4 g.

Les maillons 2 sont reliés entre eux par des tiges ou goupilles 6 d'articulation qui sont, d'une part, articulées dans des passages 8 prévus à cet effet dans les éléments de maillons centraux 4a-4e et, d'autre part, fixés par leurs extrémités ou parties extrêmes 10 (figure 2) dans des trous borgnes 12 prévus dans les éléments de maillon marginaux 4f et 4g.

Conformément à l'invention, les tiges 6 sont immobilisées dans les trous borgnes 12 à l'aide d'un dispositif de fixation 14 par soudage.

Le soudage est réalisé par la fusion d'une quantité de soudure ou pâte à souder 16 disposée au fond des trous borgnes 12 après l'introduction des tiges 6 dans ces trous.

Les extrémités 10 des tiges 6 définissent avec des parois dudit trou borgne une première cavité 18 contenant la soudure 16.

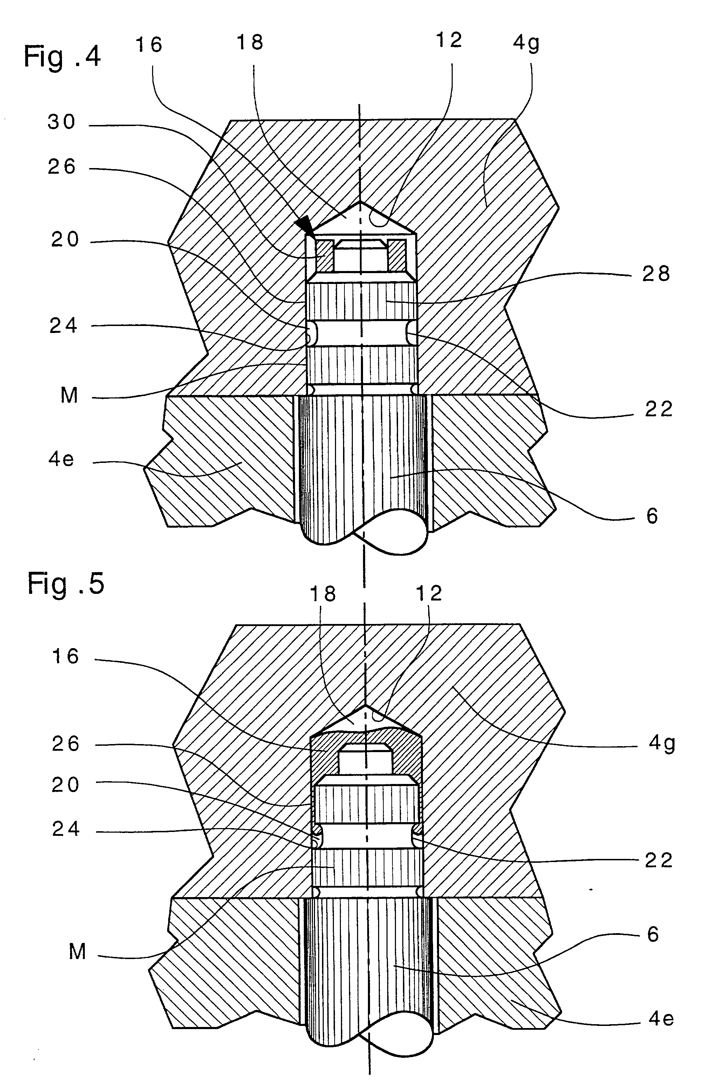

Selon l'invention le dispositif comprend une deuxième cavité 20 délimitée par une paroi latérale de la tige 6, à savoir un évidement 22 formée par une gorge annulaire dans l'exemple représenté, et une paroi latérale 24 du trou 12 (figure 4 et 5). Dans cet exemple et compte tenu des petites dimensions (de l'ordre de quelques millimètres) de la tige 6, celle-ci comprend l'évidement 22 qui forme la totalité de la cavité 20.

Il est bien entendu que dans d'autres systèmes comportant des éléments à assembler de plus grandes dimensions la cavité 20 peut être formée par des évidements ménagés respectivement dans la tige 6 et/ou dans une paroi du trou 12, ces évidements étant destinés à venir en regard l'un de l'autre lorsque la tige est introduite dans le trou 12.

La cavité 20 est séparée axialement de la cavité 18 par une zone intermédiaire 26 de la tige 6. Cette zone intermédiaire 26 est ajustée dans ledit trou, c'est à dire que les dimensions du trou 12 et de la zone 26 permettent un déplacement à la main de la tige 6 dans le trou.

Le dispositif comprend en outre des moyens de communication 28 tel qu'un passage qui s'étendent entre la cavité 18 et la cavité 20 pour canaliser de la soudure en fusion circulant par capillarité de la cavité 18 vers la cavité 20 dans laquelle cette soudure peut être collectée au moment du chauffage de la soudure 16. Les moyens de communication 28 permettent aussi une évacuation de l'air emprisonné entre le fond du trou et l'extrémité de la tige facilitant ainsi l'introduction de la tige dans le trou.

Dans l'exemple illustré, les moyens de communication 28 sont formés par les stries d'un moletage qui est réalisé dans la zone intermédiaire 26 de l'extrémité de la tige 6 et qui délimite une pluralité de micropassages dans lesquels la soudure en fusion peut circuler, ces micropassages débouchant dans la cavité 20.

On notera que ce moletage permet en outre d'éliminer les problèmes d'ajustement précis de la tige dans le trou. On peut notamment ainsi réaliser des ajustements avec des tolérances de l'ordre de 5/100ème de millimètre entre ces deux éléments.

Il va de soi que d'autres formes de moyens de communication 28 (non représentés) peuvent être envisagés. En particulier, on peut prévoir par exemple que les moyens de communication 28 comprennent une rainure axiale s'étendant à la surface de la tige 6 depuis son extrémité libre jusqu'à la gorge annulaire définissant la cavité 20 ou encore que les moyens de communication 28 soient formés par le jeu radial entre la paroi de la tige 6 dans la zone intermédiaire et la paroi du trou 12.

Selon une caractéristique avantageuse de l'invention, le volume de la cavité 20 est supérieur ou égal à 30 % du volume de la soudure 16 qui assure la fixation de la tige 6 sur l'élément de maillon. La demanderesse a constaté qu'un tel volume permettait de pallier le problème de débordement de la soudure en dehors du trou dans la plupart des circonstances.

Dans les modes de réalisation représentés, on remarquera que l'extrémité 10 de la tige 6 comprend une deuxième partie moletée M qui sert de guidage axial et facilite l'introduction de l'extrémité de la tige 6 dans le trou 12.

Le procédé d'assemblage d'une tige d'articulation 6 dans un trou borgne 12 d'un élément de maillon 4 va maintenant être décrit plus particulièrement en liaison avec les figures 2 à 7.

On se munit tout d'abord d'une tige 6 ou goupille d'articulation (figure 2) dans laquelle on ménage à une distance axiale de son extrémité un évidement 22, ici une gorge pour définir une cavité 20 (figure 4) lorsque la tige 6 sera introduite dans le trou borgne 12.

Selon une variante réalisation non représentée l'évidement peut être réalisé dans une paroi du trou 12 ou encore partiellement dans la tige 6 et dans la paroi du trou 12.

La tige et/ou le trou 12 sont également conformés pour réaliser les moyens de communication 28 ou passage entre la cavité 20 et l'extrémité de la tige 6, notamment un fois que la tige 6 est introduite dans le trou 12.

Selon un mode de réalisation préféré, le conformage de la tige 6 pour réaliser les moyens de communication 28 consiste à moleter l'extrémité de la tige au moins dans la zone intermédiaire 26 qui sépare la cavité 20 de l'extrémité de la tige 6. Les stries 28 du moletage constituent ainsi des micropassages dans lesquels la soudure 16 va pouvoir circuler au moment de sa fusion. Les stries 28 sont de préférence des stries axiales.

La soudure 16 est ensuite disposée dans le fond du trou 12 et/ou sur l'extrémité de la tige 6.

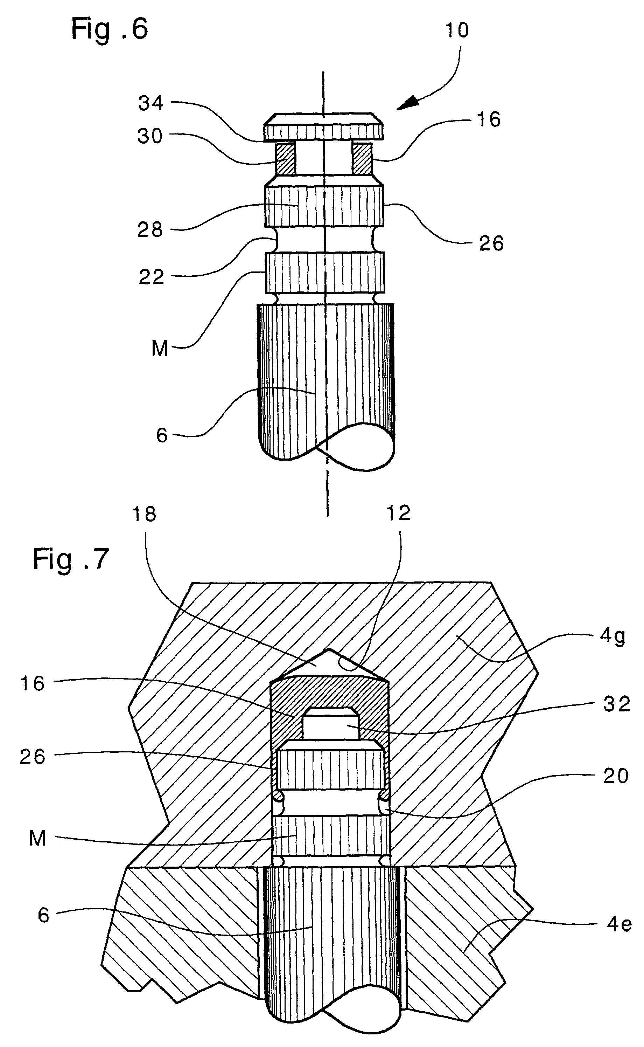

La soudure est choisie de façon classique et a généralement un point de fusion d'au moins 100°C en dessous du point de fusion le plus bas des éléments à souder. A titre d'exemple, une soudure à base d'argent ayant un point de fusion de l'ordre de 800°C peut être utilisée pour souder une tige et un élément de maillon réalisés en acier. La soudure peut se présenter sous différentes formes, par exemple sous forme de pâte à souder (figure 5). Mais de préférence, la soudure est réalisée sous forme solide (figures 3, 6, et 4) et présente la forme d'une bague 30 fermée ou fendue qui peut être disposée à l'extrémité de la tige 6. Dans ce dernier cas, la tige 6 comporte à son extrémité libre un téton central 32 (figure 3) sur lequel est disposée la bague 30 ou selon une variante de réalisation une gorge annulaire 34 (figure 6) dans laquelle est disposée la bague 30 qui est dans ce cas obligatoirement fendue.

Une fois la soudure 16 mise en place dans le trou et/ou sur l'extrémité de la tige 6, celle-ci est introduite dans le trou 12 (figures 4 et 5).

Dans le cas où la zone intermédiaire 26 de la tige 6 est moletée, les stries du moletage peuvent se déformer au cours de l'introduction de la tige 6 dans le trou 6 ce qui facilite, d'une part l'ajustement de la tige 6 dans le trou 12 et assure, d'autre part, un maintien en position relative de la tige et de l'élément de maillon avant l'opération de soudage ultérieure.

On procède ensuite à l'opération de soudage qui consiste à chauffer l'ensemble formé de la tige 4 et de l'élément de maillon 4 pour faire fondre la soudure 16 et réaliser l'assemblage de ces deux éléments. Au cours du chauffage, la soudure ou la pâte à souder amenée à l'état liquide s'étend et circule par capillarité entre la surface extérieure de tige 6 et notamment dans la zone intermédiaire 26 et la paroi 26 du trou 12, à partir de la cavité délimitée 18 par le fond du trou et l'extrémité de la tige 6 vers la cavité 20 et le cas échéant dans cette cavité.

Cette cavité 20 assure ainsi un dispositif de collecte et d'arrêt de la soudure 16 qui au moment de la fusion pourrait circuler par capillarité hors du trou et bloquer par exemple les éléments de maillons centraux dans le cas du bracelet décrit à la figure 1.

L'opération de soudage est de préférence réalisée en disposant l'ensemble à souder sur une bande qui défile dans un four dans lequel règne une atmosphère neutre.

## Revendications

1. Dispositif comprenant une tige d'articulation (6) ayant une extrémité et un élément métallique (4f, 4g) ayant un trou borgne (12), ladite extrémité de la tige (6) étant fixée dans le trou borgne (12) de l'élément métallique (4f, 4g), par soudage, ce dernier étant réalisé par la fusion d'une quantité de soudure (16) après l'introduction de la tige (6) dans le trou (12), ladite extrémité (10) de ladite tige (6) définissant avec des parois (24) dudit trou borgne (12) une première cavité (18) contenant ladite soudure (16), **caractérisé en ce qu'**il comprend une deuxième cavité (20) délimitée par une paroi latérale (22) de la tige d'articulation et une paroi latérale (24) du trou borgne (12), séparée axialement de la première cavité (18) par une zone intermédiaire (26) dans laquelle ladite tige (6) est ajustée dans ledit trou (12), et **en ce qu'**il comprend des moyens de communication (28) entre les première (18) et deuxième (20) cavités pour canaliser un excès de soudure (16) provenant de la première cavité (18) vers la deuxième cavité (20) dans laquelle cet excès peut être collecté au moment de la fusion de la soudure (16).

2. Dispositif selon la revendication 1, **caractérisé en ce que** les moyens de communication sont formés par les stries (28) d'un moletage ménagé dans ladite zone intermédiaire (26).

3. Dispositif selon la revendication 1 ou 2, **caractérisé en ce que** ladite tige (6) comprend un évidement (22) qui forme au moins en partie la deuxième cavité (20).

4. Dispositif selon la revendication 3, **caractérisé en ce que** l'évidement (22) est formé par une gorge annulaire.

5. Dispositif selon l'une des revendications précédentes, **caractérisé en ce que** l'extrémité de la tige (10) comprend un téton central (32) autour duquel est déposé la soudure (16, 32).

6. Dispositif selon l'une des revendications 1 à 4, **caractérisé en ce que** l'extrémité de la tige (6) comporte une gorge annulaire destinée à recevoir ladite quantité de soudure (16), ladite gorge annulaire formant avec une paroi latérale (24) du trou borgne (12) la première cavité (18).

7. Dispositif selon l'une des revendications précédentes, **caractérisé en ce que** le volume de la deuxième cavité (20) est supérieur ou égal à 30% du volume de la soudure (16).

8. Bracelet à maillons articulés (2), notamment pour montre, les maillons (2) étant formés chacun de plusieurs éléments de maillon (4a-4g) respectivement, des éléments de maillon centraux (4a-4e) et des éléments de maillon marginaux (4f, 4g), reliés par des tiges d'articulation (6), qui sont, d'une part, articulées dans des passages (8) prévus à cet effet dans les éléments de maillon centraux (4a-4e) et, d'autre part, fixés par leurs extrémités (10) dans des trous borgnes (12) prévus dans les éléments de maillon marginaux (4f, 4g),
**caractérisé en ce que** au moins une extrémité des tiges d'articulation (6) et un élément de maillon marginal forment un dispositif selon l'une des revendications 1 à 7.

9. Procédé d'assemblage d'une tige d'articulation (6) métallique avec un élément métallique (4f, 4g) comprenant les étapes suivantes :
- se munir d'une tige d'articulation (6);
- ménager un évidement (22) dans la tige d'articulation (6) à une certaine distance axiale de l'extrémité de la tige (6) et/ou un évidement dans une paroi (24) du trou pour définir une cavité (20) lorsque la tige (6) est introduite dans le trou borgne (12) et conformer la tige et/ou le trou pour réaliser des moyens de communication (28) entre la cavité (20) et l'extrémité de la tige (10);
**caractérisé en ce qu'**il comprend les étapes supplémentaires consistant à:
- disposer de la soudure (16) dans le fond du trou (12) et/ou sur l'extrémité (10,32) de la tige (6);
- introduire l'extrémité (10, 32) de la tige (6) dans le trou borgne (12), et
- chauffer l'ensemble formé de la tige (6) et de l'élément (4f, 4g) pour faire fondre la soudure et réaliser l'assemblage de la tige (6) dans ledit trou (12), la soudure (16) qui circule vers l'extérieur du trou via lesdits moyens de communication (28) étant collectée dans ladite cavité (20)

10. Procédé d'assemblage selon la revendication 9 **caractérisé en ce que** le conformage de la tige (6) pour réaliser lesdits moyens de communication (28) consiste à réaliser des stries par moletage de l'extrémité (10) de la tige (6).

11. Procédé d'assemblage selon la revendication 9 ou 10 **caractérisé en ce que** la soudure (16) a la forme d'une bague (30) qui est disposée à l'extrémité (32) de la tige préalablement à l'étape d'introduction de la tige (6) dans le trou (12).

12. Procédé d'assemblage selon l'une des revendications 9 à 11
**caractérisé en ce qu'**un téton central (32) ou une gorge annulaire (34) est prévu à l'extrémité (10) de la tige et **en ce que** ladite bague (30) de soudure (16) est disposée sur ledit téton ou dans ladite gorge.

13. Procédé d'assemblage selon l'une des revendications 9 à 12,
**caractérisé en ce que** ledit évidement (22) est ménagé dans la tige (6) pour définir une zone intermédiaire (26) située entre ladite extrémité et ledit évidement (22), qui est ajustée dans ledit trou (12).

## Patentansprüche

1. Vorrichtung, die einen Gelenkstift (6) mit einem Ende und ein Metallelement (4f, 4g) mit einem Blindloch (12) umfaßt, wobei das Ende des Stifts (6) in dem Blindloch (12) des Metallelements (4f, 4g) durch Schweißen befestigt ist, wobei das Schweißen durch Schmelzen einer Lotmenge (16) nach dem Einführen des Stifts (6) in das Loch (12) ausgeführt wird, wobei das Ende (10) des Stifts (6) mit den Wänden (24) des Blindlochs (12) einen das Lot (16) enthaltenden ersten Hohlraum (18) definiert, **dadurch gekennzeichnet, daß** sie einen zweiten Hohlraum (20) aufweist, der durch eine Seitenwand (22) des Gelenkstifts und eine Seitenwand (24) des Blindlochs (12) begrenzt ist und vom ersten Hohlraum (18) axial durch eine Zwischenzone (26) getrennt ist, in der sich der Stift (6) auf das Loch (12) ausrichtet, und daß sie Mittel (28) umfaßt, die eine Verbindung zwischen dem ersten Hohlraum (18) und dem zweiten Hohlraum (20) herstellen, um überschüssiges Lot (16), das vom ersten Hohlraum (18) ankommt, zum zweiten Hohlraum (20) zu leiten, in der dieser Überschuß zum Zeitpunkt des Schmelzens des Lots (16) gesammelt werden kann.

2. Vorrichtung nach Anspruch 1, **dadurch gekennzeichnet, daß** die Verbindungsherstellungsmittel durch die Riefen (28) einer Rändelung gebildet sind, die in der Zwischenzone (26) ausgebildet ist.

3. Vorrichtung nach Anspruch 1 oder 2, **dadurch gekennzeichnet, daß** der Stift (6) eine Aussparung (22) aufweist, die wenigstens teilweise den zweiten Hohlraum (20) bildet.

4. Vorrichtung nach Anspruch 3, **dadurch gekennzeichnet, daß** die Aussparung (22) durch eine ringförmige Nut gebildet ist.

5. Vorrichtung nach einem der vorhergehenden Ansprüche, **dadurch gekennzeichnet, daß** das Ende des Stifts (10) einen Mittelzapfen (32) aufweist, um den das Lot (16, 32) abgelagert ist.

6. Vorrichtung nach einem der Ansprüche 1 bis 4, **dadurch gekennzeichnet, daß** das Ende des Stifts (6) eine ringförmige Nut aufweist, die dazu bestimmt ist, die Lotmenge (16) aufzunehmen, wobei die ringförmige Nut mit einer Seitenwand (24) des Blindlochs (12) den ersten Hohlraum (18) bildet.

7. Vorrichtung nach einem der vorhergehenden Ansprüche, **dadurch gekennzeichnet, daß** das Volumen des zweiten Hohlraums (20) mindestes 30 % des Volumens des Lots (16) ausmacht.

8. Armband mit aneinander angelenkten Gliedern (2), insbesondere für Uhren, wobei die Glieder (2) jeweils aus mehreren Gliederelementen (4a-4g), d. h. Mittelgliederelementen (4a-4e) und Randgliederelementen (4f, 4g), die über Gelenkstifte (6) verbunden sind, gebildet sind, wobei die Gelenkstifte (6) einerseits in Durchlässen (8), die hierzu in den Mittelgliederelementen (4a-4e) vorgesehen sind, schwenkbar sind und andererseits durch ihre Enden (10) in Blindlöchern (12), die in den Randgliederelementen (4f, 4g) vorgesehen sind, befestigt sind, **dadurch gekennzeichnet sind, daß** wenigstens ein Ende der Gelenkstifte (6) und ein Randgliederelement eine Vorrichtung nach einem der Ansprüche 1 bis 7 bilden.

9. Verfahren zum Zusammenfügen eines metallischen Gelenkstifts (6) mit einem Metallelement (4f, 4g), das die folgenden Schritte umfaßt:
- Nehmen eines Gelenkstifts (6);
- Ausbilden einer Aussparung (22) in dem Gelenkstift (6) in einem bestimmten axialen Abstand vom Ende des Stifts (6) und/oder einer Aussparung in einer Wand (24) des Lochs, um einen Hohlraum (20) zu definieren, wenn der Stift (6) in das Blindloch (12) eingeführt ist, und Anpassen des Stifts und/oder des Lochs, um Mittel (28), die zwischen dem Hohlraum (20) und dem Ende des Stifts (10) eine Verbindung herstellen, zu schaffen;
**dadurch gekennzeichnet, daß** es die folgenden zusätzlichen Schritte umfaßt, die darin bestehen:
- in dem Boden des Lochs (12) und/oder am Ende (10, 32) des Stifts (6) Lot (16) vorzusehen;
- das Ende (10, 32) des Stifts (6) in das Blindloch (12) einzuführen, und
- die aus dem Stift (6) und dem Element (4f, 4g) gebildete Einheit zu erwärmen, um das Lot zu schmelzen und um die Zusammenfügung des Stifts (6) in dem Loch (12) vorzunehmen, wobei das Lot (16), das durch die Verbindungsherstellungsmittel (28) zur Außenseite des Lochs fließt, in dem Hohlraum (20) gesammelt wird.

10. Zusammenfügungsverfahren nach Anspruch 9, **dadurch gekennzeichnet, daß** die Anpassung des Stifts (6) in der Weise, daß die Verbindungsherstellungsmittel (28) gebildet werden, darin besteht, durch Rändeln des Endes (10) des Stifts (6) Riefen zu bilden.

11. Zusammenfügungsverfahren nach Anspruch 9 oder 10, **dadurch gekennzeichnet, daß** das Lot (16) die Form eines Rings (30) hat, der vor dem Schritt des Einführens des Stifts (6) in das Loch (12) auf dem Ende (32) des Stifts angeordnet wird.

12. Zusammenfügungsverfahren nach einem der Ansprüche 9 bis 11, **dadurch gekennzeichnet, daß** am Ende (10) des Stifts ein Mittelzapfen (32) oder eine ringförmige Nut (34) vorgesehen wird und daß der Ring (30) aus Lot (16) auf dem Zapfen bzw. in der Nut angeordnet wird.

13. Zusammenfügungsverfahren nach einem der Ansprüche 9 bis 12, **dadurch gekennzeichnet, daß** die Aussparung (22) in dem Stift (6) ausgebildet wird, um eine Zwischenzone (26) zu definieren, die sich zwischen dem Ende und der Aussparung (22) befindet und auf das Loch (12) ausgerichtet wird.

## Claims

1. Device including an articulation pin (6) having an end and a metal element (4f, 4g) having a blind hole (12), said end of the pin (6) being fixed in the blind hole (12) of the metal element (4f, 4g), by soldering, the latter being made by melting a quantity of solder (16) after the pin (6) is introduced into the hole (12), said end (10) of said pin (6) defining with walls (24) of said blind hole (12) a first cavity (18) containing said solder (16), **characterised in that** it includes a second cavity (20) delimited by a lateral wall (22) of the articulation pin and a lateral wall (24) of the blind hole (12), axially separated from the first cavity (18) by an intermediate zone (26) in which said pin (6) is fitted in said hole (12), and **in that** it includes communication means (28) between the first (18) and second (20) cavities for channelling an excess of solder (16) from the first cavity (18) towards the second cavity (20) in which said excess can be collected when the solder is melted.

2. Device according to claim 1, **characterised in that** the communication means are formed by the crosses (28) of a knurling arranged in said intermediate zone (26).

3. Device according to claim 1 or 2, **characterised in that** said pin (6) includes a recess (22) which forms at least partly the second cavity (20).

4. Device according to claim 3, **characterised in that** the recess (22) is formed by an annular groove.

5. Device according to any of the preceding claims, **characterised in that** the end of the pin (10) includes a central stud (32) around which the solder (16, 32) is deposited.

6. Device according to claims 1 to 4, **characterised in that** the end of the pin (6) includes an annular groove for receiving said quantity of solder (16), said annular groove forming, with a lateral wall (24) of the blind hole (12), the first cavity (18).

7. Device according to any of the preceding claims, **characterised in that** the volume of the second cavity (20) is greater than or equal to 30% of the volume of the solder (16).

8. Wristband with articulated links (2), particularly for a watch, the links (2) each being formed of several link elements (4a-4g) respectively central link elements (4a-4e) and marginal link elements (4f, 4g), connected by articulation pins (6), which are, on the one hand, articulated in passages (8) provided for this purpose in the central link elements (4a-4e) and, on the other hand, fixed by their ends (10) in blind holes (12) provided in the marginal link elements (4f, 4g), **characterised in that** at least one end of the articulation pins (6) and a marginal link element form a device according to one of claims 1 to 7.

9. Method for assembling a metal articulation pin (6) to a metal element (4f, 4g) including the following steps :
- providing an articulation pin (6);
- arranging a recess (22) in the articulation pin (6) at a certain axial distance from the end of the pin (6) and/or a recess in a wall (24) of the hole to define a cavity (20) when the pin (6) is introduced into the blind hole (12) and to shape the pin and/or the hole to make communication means (28) between the cavity (20) and the end of the pin (10);
**characterised in that** it includes the additional steps consisting in :
- disposing solder (16) in the bottom of the hole (12) and/or on the end of (10, 32) of the pin (6);
- introducing the end (10, 32) of the pin (6) in the blind hole (12), and
- heating the assembly formed of the pin (6) and the element (4f, 4g) to melt the solder and make the pin (6) assembly in said hole (12), the solder (16) which flows towards the exterior of the hole via said communication means (28) being collected in said cavity (20).

10. Assembly method according to claim 9, **characterised in that** shaping the pin (6) to form said communication means (28) consists in making crosses by knurling the end (10) of the pin (6).

11. Assembly method according to claim 9 or 10, **characterised in that** the solder (16) has the shape of a ring (30) which is disposed at the end (32) of the pin prior to the step of introducing the pin (6) in the hole (12).

12. Assembly method according to any of claims 9 to 11, **characterised in that** a central stud (32) or an annular groove (34) is provided at the end (10) of the pin and **in that** said ring (30) of solder (16) is disposed on said stud or in said groove.

13. Assembly method according to any of claims 9 to 12, **characterised in that** said recess (22) is arranged in the pin (6) to define an intermediate zone (26) located between said end and said recess (22), which is fitted into said hole (12).
